# EUROPEAN PATENT SPECIFICATION

(11) **EP 4 254 323 B1**
(45) Date of publication and mention of the grant of the patent: **20.08.2025**
(21) Application number: 21897512.6
(22) Date of filing: 07.10.2021
(51) Int. Cl.: G06T 7/00, G06N 3/08, G06N 20/00, G06V 10/82, G06V 10/764, G06V 10/776, G06N 3/096

(54) **MACHINE LEARNING DEVICE, MACHINE LEARNING METHOD, AND TRAINED MODEL**
MASCHINENLERNVORRICHTUNG, MASCHINENLERNVERFAHREN UND TRAINIERTES MODELL
DISPOSITIF D'APPRENTISSAGE AUTOMATIQUE, PROCÉDÉ D'APPRENTISSAGE AUTOMATIQUE ET MODÈLE ENTRAÎNÉ

(30) Priority: 27.11.2020 JP 2020196990
(43) Date of publication of application: 04.10.2023
(73) Proprietor: JVCKENWOOD Corporation, Yokohama-shi, Kanagawa 221-0022 (JP)
(72) Inventor: TAKEHARA Hideki, Yokohama-shi Kanagawa 221-0022 (JP); KIDA Shingo, Yokohama-shi Kanagawa 221-0022 (JP); YANG Yincheng, Yokohama-shi Kanagawa 221-0022 (JP)
(74) Representative: Wimmer, Hubert
(86) International application number: PCT/JP2021/037155
(87) International publication number: WO 2022/113534

(56) References cited:
- WO-A1-2018/142766
- WO-A1-2020/104072
- WANG TIANYANG ET AL: "Instance-Based Deep Transfer Learning", 2019 IEEE WINTER CONFERENCE ON APPLICATIONS OF COMPUTER VISION (WACV), 1 January 2019 (2019-01-01), pages 367 - 375, XP093124263, ISBN: 978-1-7281-1975-5, Retrieved from the Internet <URL:https://ieeexplore.ieee.org/stampPDF/getPDF.jsp?tp=&arnumber=8659197&ref=aHR0cHM6Ly9pZWVleHBsb3JlLmllZWUub3JnL2Fic3RyYWN0L2RvY3VtZW50Lzg2NTkxOTc=> DOI: 10.1109/WACV.2019.00045
- BASHA S.H. SHABBEER ET AL: "AutoTune: Automatically Tuning Convolutional Neural Networks for Improved Transfer Learning", NEURAL NETWORKS, 25 April 2020 (2020-04-25), pages 112 - 122, XP093124242, DOI: 10.1016/j.neunet.2020.10.009
- GUO YUNHUI ET AL: "SpotTune: Transfer Learning Through Adaptive Fine-Tuning", 2019 IEEE/CVF CONFERENCE ON COMPUTER VISION AND PATTERN RECOGNITION (CVPR), IEEE, 15 June 2019 (2019-06-15), pages 4800 - 4809, XP033686837, DOI: 10.1109/CVPR.2019.00494
- LEE, SEONG-WHAN ; LI, STAN Z: " Advances in biometrics : international conference, ICB 2007, Seoul, Korea, August 27 - 29, 2007 ; proceedings", vol. 9915 Chap.34, 24 November 2016, SPRINGER , Berlin, Heidelberg , ISBN: 3540745491, article CHU BRIAN; MADHAVAN VASHISHT; BEIJBOM OSCAR; HOFFMAN JUDY; DARRELL TREVOR: "Best Practices for Fine-Tuning Visual Classifiers to New Domains", pages: 435 - 442, XP047363113, 032548, DOI: 10.1007/978-3-319-49409-8_34

## Description

### [TECHNICAL FIELD]

The present invention relates to machine learning technologies.

### [BACKGROUND ART]

Transfer learning is known as a technology of adapting a model trained in a domain to another domain. In transfer learning, the domain that is a source is referred to as a source domain, and a domain that is a destination is referred to as a target domain. It is required to adapt a model trained in a source model to a target domain efficiently.

JP 2020-502665 A discloses domain transformation neural networks configured to receive an input image from a source domain and process a network input comprising the input image from the source domain to generate a transformed image that is a transformation of the input image from the source domain to a target domain that is different from the source domain.

WANG TIANYANG ET AL, "Instance-Based Deep Transfer Learning", 2019 IEEE WINTER CONFERENCE ON APPLICATIONS OF COMPUTER VISION (WACV), doi:10.1109/WACV.2019.00045, ISBN 978-1-7281-1975-5, January 2019, pages 367 - 375, discloses an instance-based deep transferlearning.

Basha S.H. Shabbeer ET AL: "AutoTune: Automatically Tuning Convolutional Neural Networks for Improved Transfer Learning", Neural networks, 25 April 2020 (2020-04-25), pages 112-122, DOI: 10.1016/j.neunet.2020.10.009, discloses a mechanism for improved transfer learning by automatically tuning a pre-trained Convolutional Neural Networks (CNN) with the knowledge from target data using Bayesian Optimization. GUO YUNHUI ET AL: "SpotTune: Transfer Learning Through Adaptive Fine-Tuning", 2019 IEEE/CVF CONFERENCE ON COMPUTER VISION AND PATTERN RECOGNITION (CVPR), IEEE, 15 June 2019 (2019-06-15), pages 4800-4809, DOI: 10.1109/CVPR.2019.00494, discloses SpotTune, an adaptive fine-tuning approach which finds the optimal fine-tuning strategy per instance for the target data. In SpotTune, given an image from the target task, a policy network is used to make routing decisions on whether to pass the image through the fine-tuned layers or the pre-trained layers.

### [SUMMARY OF INVENTION]

When adapting a model trained in a source domain to a target domain in transfer learning, transfer learning has been performed by disregarding the property of the domain. This has led to a problem in that the quality of generalization of inference precision is lowered, or the volume of process grows unnecessarily large.

The present invention addresses the issue described above, and a purpose thereof is to provide a machine learning technology capable of performing transfer learning in accordance with the property of a domain.

In accordance with the present invention, a machine learning device, a machine learning method, and a non-transitory computer readable recording medium as set forth in the appended claims is provided.

According to the embodiment, it is possible to provide a machine learning technology capable of performing transfer learning in accordance with the property of a domain.

### [BRIEF DESCRIPTION OF DRAWINGS]

Fig. 1 shows a configuration of a machine learning device and an inference device according to the embodiment;
Fig. 2 shows a detailed configuration of the transfer learning unit of the machine learning device of Fig. 1;
Fig. 3 shows a structure of a neural network model used as a source model and a target model in the machine learning device of Fig. 1;
Fig. 4 shows layers in the target model that are targeted for training in accordance with the domain adaptability;
Fig. 5 shows layers that are targeted for training in accordance with the domain adaptability according to another example;
Fig. 6 shows layers that are targeted for training in accordance with the domain adaptability according to still another example; and
Fig. 7 is a flowchart showing a sequence of machine learning steps executed by the machine learning device of Fig. 1.

### [DESCRIPTION OF EMBODIMENTS]

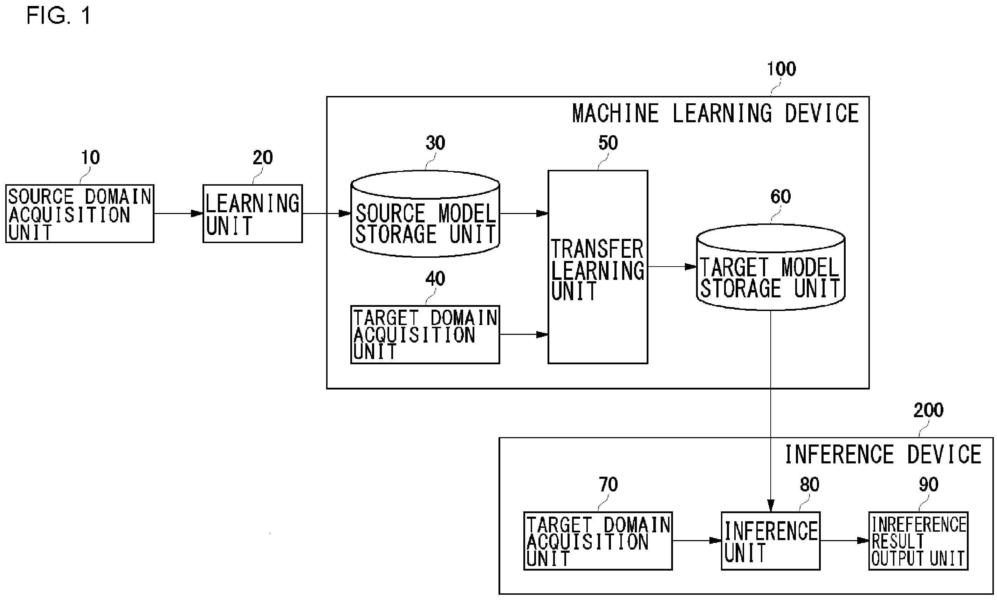

Fig. 1 shows a configuration of a machine learning device 100 and an inference device 200 according to the embodiment. The machine learning device 100 includes a source model storage unit 30, a target domain acquisition unit 40, a transfer learning unit 50, and a target model storage unit 60. The inference device 200 includes a target domain acquisition unit 70, an inference unit 80, and an inference result output unit 90.

Transfer learning is one of machine learning methods and is a method of adapting a model trained for a first task having sufficient data to learning of a second task related to the first task but not having sufficient data. Transfer learning can transfer the knowledge learned on the basis of sufficient data to a further task and so makes it possible to obtain highly precise results for the second task not having much data.

In transfer learning, a case in which the input domain of the first task and the input domain of the second task are of the same type and differ only in probability distribution is referred to as "domain adaptation".

The input domain of the first task that is a source of transfer is referred to as "source domain", and the input domain of the second task that is a destination of transfer is referred to as "target domain". Further, the model trained for the first task is referred to as "source model", and the model trained for the second task is referred to as "target model".

In one example of domain adaptation, computer graphics (CG) and web images, which are data that can be easily collected, are used as the source domain, and real images captured by a camera, etc. are used as the target domain.

By training the source model using a large quantity of CG images as the source domain and using images captured by the camera as the target domain, transfer learning from the source model is performed in domain adaptation to generate a target model. It will be assumed here that classes included in the domain are exemplified by persons, cars, bicycles, dogs, and motorcycles, and the task is categorization.

The machine learning device 100 is a device to generate a target model by transfer learning, based on a trained source model and a target domain.

The source domain acquisition unit 10 acquires, as the source domain, CG images of persons, cars, bicycles, dogs, and motorcycles in a quantity sufficiently large to train the source model to categorize persons, cars, bicycles, dogs, and motorcycles with high precision.

The learning unit 20 uses the source domain to train a neural network model by machine learning to generate a source model and stores the generated source model in the source model storage unit 30. The source model can categorize the source domain with high precision.

The source model stored in the source model storage unit 30 is a trained source model used as a model at the source of transfer in transfer learning. The source model is a neural network model.

The target domain acquisition unit 40 acquires, as the target domain, images of persons, cars, bicycles, dogs, and motorcycles captured by a camera. The target domain generally has a smaller quantity of data than the source domain.

The transfer learning unit 50 uses the target domain acquired by the target domain acquisition unit 40 to generate a target model by applying transfer learning to the source model stored in the source model storage unit 30. The transfer learning unit 50 stores the generated target model in the target model storage unit 60.

The target model stored in the target model storage unit 60 is a trained model generated by transfer learning. The target model is a neural network model. The target model is derived from re-training a part of the source model at the source of transfer that is duplicated, by using the target domain.

The inference device 200 is a device that infers from and categorizes images by using the target model generated by the machine learning device 100. The inference device 200 is provided with, for example, an imaging unit and infers from images acquired from the imaging unit and outputs a result of inference.

The target domain acquisition unit 70 acquires the target domain targeted for inference and supplies the target domain to the inference unit 80. The inference unit 80 infers from the target domain based on the target model stored in the target model storage unit 60 and outputs a result of inference to the inference result output unit 90. The inference result output unit 90 outputs categorization resulting from the inference.

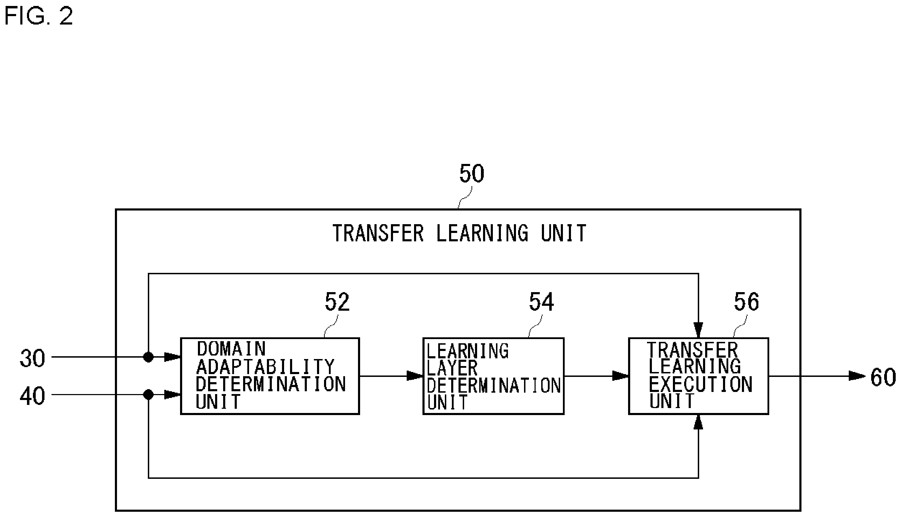

Fig. 2 shows a detailed configuration of the transfer learning unit 50 of the machine learning device 100. The transfer learning unit 50 includes a domain adaptability determination unit 52, a learning layer determination unit 54, and a transfer learning execution unit 56.

The domain adaptability determination unit 52 determines the domain adaptability based on the precision of inferring from images in the target domain by using the source model, which is a neural network, trained by using images in the source domain as training data.

More specifically, the domain adaptability determination unit 52 determines the domain adaptability based on the inference (categorization) precision of the source model stored in the source model storage unit 30, defined with respect to the target domain acquired by the target domain acquisition unit 40. In this case, the domain adaptability represents a mean average precision (mAP) of the source model with respect to the target domain. mAP is an average of average precision scores of all classes. mAP is a real number from 0 to 1. In this embodiment, precision is used as an index of domain adaptability. Alternatively, F value, or sensitivity is used. Further, precision of domain adaptability is defined as precision of a source model, but the requirement is that the task categorization) of the target domain can be executed, and the embodiment is not limited to approach described above. For example, precision of a trained model located on a cloud, etc. and capable of categorization into a larger number of categories than in the embodiment may be used so long as it can categorize persons, cars, bicycles, dogs, and motorcycles targeted for categorization in the embodiment.

The learning layer determination unit 54 determines a layer in the target model (a neural network model) targeted for training, based on the domain adaptability.

To be specific, the learning layer determination unit 54 ensures that the lower the domain adaptability, the larger the number of layers in the target model targeted for training, and, the higher the domain adaptability, the smaller the number of layers in the target model targeted for training.

The learning layer determination unit 54 may include a larger number of layers from higher layers (layers near the input) to lower layers (layers near the output) as targets of training when the domain adaptability is lower, and, may define a smaller number of layers toward lower layers (layers near the output) to be targets of training when the domain adaptability is higher. In other words, the learning layer determination unit 54 includes more of the layers near the input layer as layers targeted for training, as the domain adaptability becomes lower.

The learning layer determination unit 54 may determine only full-connected layers in the target model to be layers targeted for training when the domain adaptability is equal to or higher than a predetermined value.

Thus, when the domain adaptability is high, i.e., when the target domain and the source domain have a similar probability distribution, it is possible, by training only lower layers in the target model, to adapt the source model to the target model such that the generalization capability of detailed feature extraction of higher layers in the source model is maintained and to maintain the precision of the target model trained by transfer learning at a high level. Conversely, when the domain adaptability is low, i.e., when the target domain and the source domain have a dissimilar probability distribution, it is possible, by training a large number of layers in the target model, to increase the precision of the target model trained by transfer learning.

The transfer learning execution unit 56 uses images of the target domain as training data to apply transfer learning to the layer(s) of the target model determined by the learning layer determination unit 54 to be targeted for training. Those layers other than the layers determined to be targeted for training are layers that are not trained. The layers of the duplicated source model are used as they are without being newly trained.

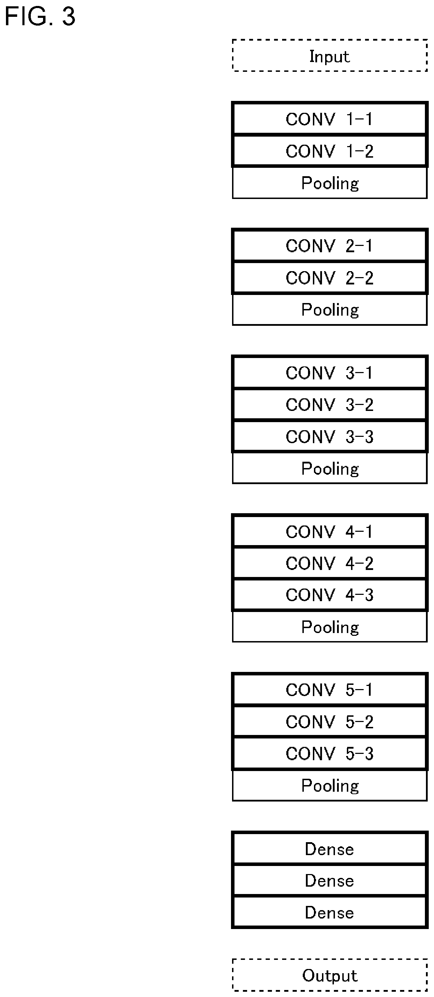

Fig. 3 shows a structure of a neural network model used as a source model and a target model in the machine learning device 100.

In the embodiment, the source model and the target model are assumed to be a neural network model VGG16. VGG16 is comprised of 13 convolutional layers (CONV), 3 fully-connected layers (Dense), and 5 pooling layers. The layers that are targeted for training include convolutional layers and full-connected layers. The pooling layer is a layer that sub-samples the feature map output from the convolutional layer.

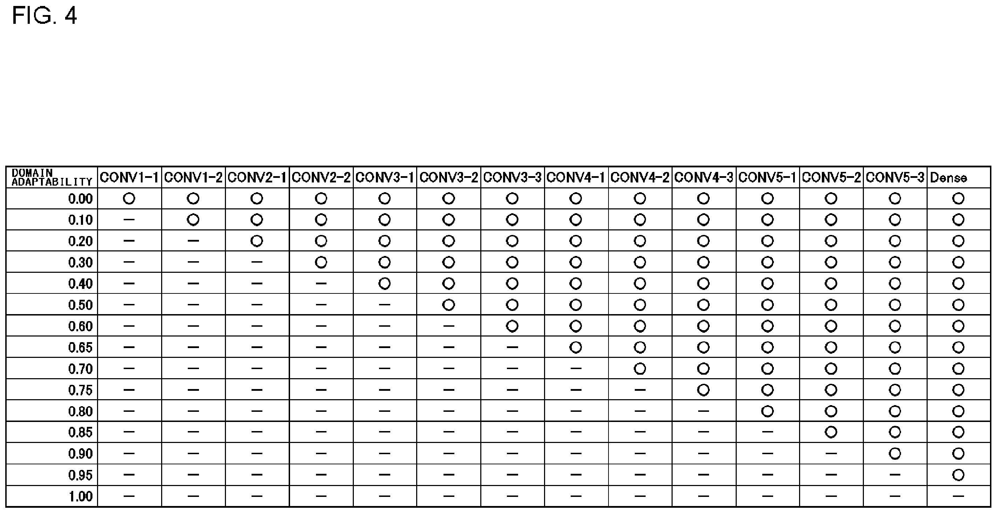

Fig. 4 shows layers in the target model that are targeted for training in accordance with the domain adaptability.

When the domain adaptability is 0.00, all layers are targeted for training. When the domain adaptability is higher than 0.00 and equal to lower than 0.10, the layers other than CONV-1 are targeted for training. A duplicate of the layer CONV1-1 of the source model is used as it is. When the domain adaptability is higher than 0.10 and equal to or lower than 0.20, the layers other than CONV1-1 and CONV1-2 are targeted for training. Duplicates of the layers CONV1-1 and CONV1-2 of the source model are used as they are. The rest remains the same, and, when the domain adaptability is higher than 0.95 and equal to or lower than 1.00, none of the layers are targeted for training. In this case, duplicates of all layers in the source model are used as they are.

Thus, the lower the domain adaptability, the larger the number of convolutional layers, including those near the input layer, are targeted for training, and, the higher the domain adaptability, the smaller the number of convolutional layers, and, those near the output layer, are targeted for training.

The relationship between the domain adaptability and the layers targeted for training is not limited to the one described above. What is required is that the lower the domain adaptability, the larger the number of layers from higher layers (layers near the input) to lower layers (layers near the output) are targeted for training, and the higher the domain adaptability, the smaller the number of layers, and, lower layers (layers near the output), are targeted for training. Dense denotes the 3 full-connected layers. In this case, 3 full-connected layers are bundled for the purpose of control, but they may be controlled one by one as in the case of convolutional layers.

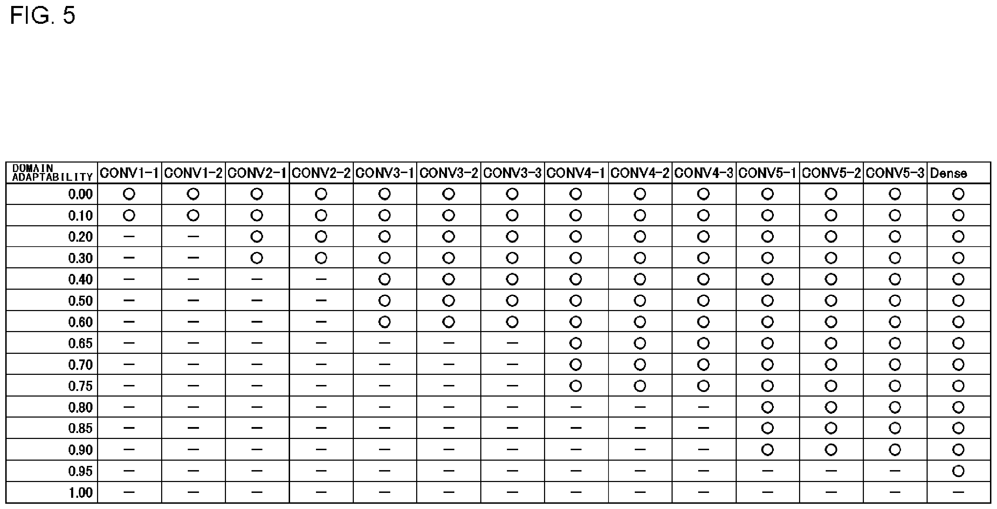

Fig. 5 shows layers that are targeted for training in accordance with the domain adaptability according to another example.

The figure shows an example in which a plurality of convolutional layers are bundled in units of pooling layers for the purpose of control. For example, the two convolutional layers CONV1-1 and CONV1-2 are bundled into one and are targeted for training when the domain adaptability is not lower than 0.00 and not higher than 0.20, and the two convolutional layers CONV2-1 and CONV2-2 are bundled into one and are targeted for training when the domain adaptability is not lower than 0.00 and not higher than 0.40. The rest remains the same, and two adjacent convolutional layers are bundled into one and are targeted for training. With the above configuration, it is possible to maintain feature extraction of the source model for each resolution of the feature map.

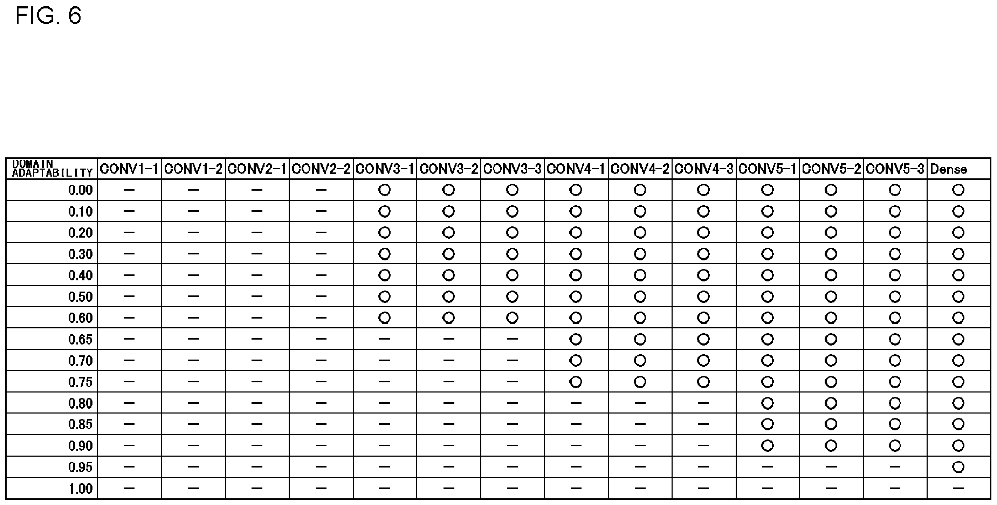

Fig. 6 shows layers that are targeted for training in accordance with the domain adaptability according to still another example.

The figure shows an example in which layers near the input layer are not targeted for training invariably. In this case, the four convolutional layers CONV1-1, CONV1-2, CONV2-2, and CONV2-2 near the input layer are not targeted for training. With regard to the other convolutional layers, the higher the domain compatibility, the smaller the number of convolutional layers, and, those near the output layer, are targeted for training.

This improves the precision and reduces the volume of computation by exploiting edge-level detailed feature extraction of the source model as it is and by starting with adapting a feature that is, to a degree, abstract in nature to the target domain.

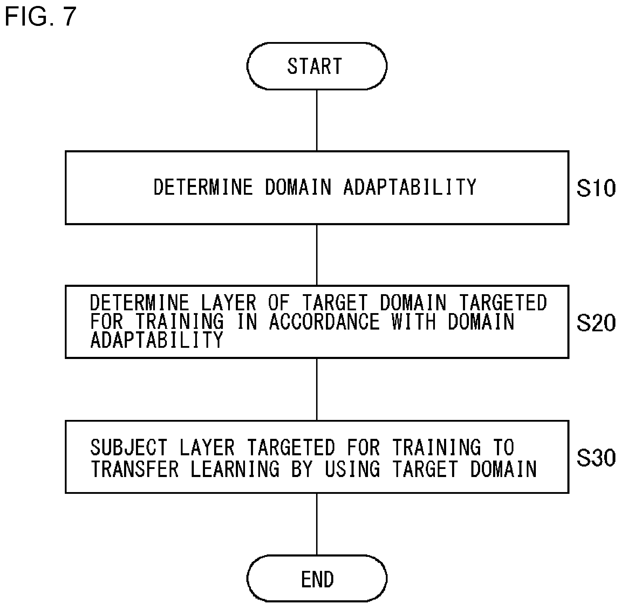

Fig. 7 is a flowchart showing a sequence of machine learning steps executed by the machine learning device 100 of Fig. 1.

The domain adaptability determination unit 52 of the transfer learning unit 50 of the machine learning device 100 determines the domain compatibility based on the precision of inference from images of the target domain using the source model trained by using images of the source domain as training data (S10).

The learning layer determination layer 54 determines the layer in the target model, which is a duplicate of the source model, targeted for training, based on the domain compatibility (S20).

The transfer learning execution unit 56 applies transfer learning to the layer in the target model targeted for training, by using images of the target domain as training data (S30).

The above-described various processes in the machine learning device 100 and the inference device 200 can of course be implemented by hardware-based devices such as a CPU and a memory and can also be implemented by firmware stored in a read-only memory (ROM), a flash memory, etc., or by software on a computer, etc. The firmware program or the software program may be made available on, for example, a computer readable recording medium. Alternatively, the program may be transmitted and received to and from a server via a wired or wireless network. Still alternatively, the program may be transmitted and received in the form of data broadcast over terrestrial or satellite digital broadcast systems.

As described above, it is possible, according to the machine learning device 100 of the embodiment, to generate a target model adapted to the property of the domain, having high a processing efficiency, and having a high inference precision and generalization capability, by changing the layer in a neural network of the target model trained by transfer learning in accordance the domain adaptability based on the precision of inference by the source model with respect to the target domain.

The present invention has been described above based on an embodiment. The embodiment is intended to be illustrative only and it will be understood by those skilled in the art that various modifications to combinations of constituting elements and processes are possible and that such modifications are also within the scope of the present invention which is defined by the appended claims.

### [INDUSTRIAL APPLICABILITY]

The present invention can be applied to machine learning technologies.

### [REFERENCE SIGNS LIST]

10 source domain acquisition unit, 20 learning unit, 30 source model storage unit, 40 target domain acquisition unit, 50 transfer learning unit, 52 domain adaptability determination unit, 54 learning layer determination unit, 56 transfer learning execution unit, 60 target model storage unit, 70 target domain acquisition unit, 80 inference unit, 90 inference result output unit, 100 machine learning device, 200 inference device

## Claims

1. A machine learning device (100) comprising:
a domain adaptability determination unit (52) configured to determine a domain adaptability based on a precision of inference from images of a second domain using a first model trained to categorize an image by using images of a first domain as training data, the first model being a neural network, wherein the domain adaptability is a mean average precision, F value or sensitivity of the first model with respect to the second domain;
a learning layer determination unit (54) configured to determine one or more layers in a second model, which is a duplicate of the first model, targeted for training, based on the domain adaptability, wherein the domain adaptability represents whether the first domain and the second domain have a similar probability distribution; and
a transfer learning execution unit (56) configured to apply transfer learning to the one or more layers in the second model targeted for training, by using images of the second domain as training data, wherein
the learning layer determination unit (54) is configured to ensure that the lower the domain adaptability, the larger the number of layers targeted for training, and the higher the domain adaptability, the smaller the number of layers targeted for training, wherein
the learning layer determination unit (54) determines more of layers near an input layer as layers targeted for training, as the domain adaptability becomes lower.

2. The machine learning device according to claim 1, wherein
the learning layer determination unit (54) is configured to determine only full-connected layers to be layers targeted for training when the domain adaptability is equal to or higher than a predetermined value.

3. A machine learning method comprising:
determining a domain adaptability based on a precision of inference from images of a second domain using a first model trained to categorize an image by using images of a first domain as training data, the first model being a neural network, wherein the domain adaptability is a mean average precision, F value or sensitivity of the first model with respect to the second domain;
determining one or more layers in a second model, which is a duplicate of the first model, targeted for training, based on the domain adaptability, wherein the domain adaptability represents whether the first domain and the second domain have a similar probability distribution; and
applying transfer learning to the one or more layers in the second model targeted for training, by using images of the second domain as training data, wherein
the determining includes ensuring that the lower the domain adaptability, the larger the number of layers targeted for training, and the higher the domain adaptability, the smaller the number of layers targeted for training, wherein
the determining determines more of layers near an input layer as layers targeted for training, as the domain adaptability becomes lower.

4. A computer-readable recording medium comprising instructions which, when executed by a computer, cause the computer to carry out the method of claim 3.

## Patentansprüche

1. Maschinenlernvorrichtung (100), umfassend:
eine Einheit (52) zum Bestimmen einer Domänenanpassbarkeit, die konfiguriert ist, um eine Domänenanpassbarkeit basierend auf einer Genauigkeit einer Inferenz aus Bildern einer zweiten Domäne unter Verwendung eines ersten Modells zu bestimmen, das trainiert ist, um ein Bild unter Verwendung von Bildern einer ersten Domäne als Trainingsdaten zu kategorisieren, wobei das erste Modell ein neuronales Netzwerk ist, wobei die Domänenanpassbarkeit eine mittlere durchnittliche Genauigkeit, ein F-Wert oder eine Empfindlichkeit des ersten Modells in Bezug auf die zweite Domäne ist;
eine Einheit (54) zum Bestimmen einer Lernschicht, die konfiguriert ist, um basierend auf der Domänenanpassbarkeit eine oder mehrere Schichten in einem zweiten Modell zu bestimmen, das ein Duplikat des ersten Modells ist, das auf das Trainieren abzielt, wobei die Domänenanpassbarkeit darstellt, ob die erste Domäne und die zweite Domäne eine ähnliche Wahrscheinlichkeitsverteilung aufweisen; und
eine Einheit (56) zum Ausführen eines Transferlernens, die konfiguriert ist, um ein Transferlernen auf die eine oder die mehreren Schichten in dem zweiten Modell anzuwenden, die auf das Trainieren abzielen, unter Verwendung von Bildern der zweiten Domäne als Trainingsdaten, wobei
die Einheit (54) zum Bestimmen einer Lernschicht konfiguriert ist, um sicherzustellen, dass die Anzahl von Schichten, die auf das Trainieren abzielen, umso größer ist, je niedriger die Domänenanpassbarkeit ist, und die Anzahl von Schichten, die auf das Trainieren abzielen, umso kleiner ist, je höher die Domänenanpassbarkeit ist, wobei
die Einheit (54) zum Bestimmen einer Lernschicht mehr von Schichten nahe einer Eingabeschicht als Schichten bestimmt, die auf das Trainieren abzielen, wenn die Domänenanpassbarkeit niedriger wird.

2. Maschinenlernvorrichtung nach Anspruch 1, wobei
die Einheit (54) zum Bestimmen einer Lernschicht konfiguriert ist, um nur vollständig verbundene Schichten als Schichten zu bestimmen, die auf das Trainieren abzielen, wenn die Domänenanpassbarkeit gleich oder höher als ein vorbestimmter Wert ist.

3. Maschinenlernverfahren, umfassend:
Bestimmen einer Domänenanpassbarkeit basierend auf einer Genauigkeit einer Inferenz aus Bildern einer zweiten Domäne unter Verwendung eines ersten Modells, das trainiert ist, um ein Bild unter Verwendung von Bildern einer ersten Domäne als Trainingsdaten zu kategorisieren, wobei das erste Modell ein neuronales Netzwerk ist, wobei die Domänenanpassbarkeit eine mittlere durchnittliche Genauigkeit, ein F-Wert oder eine Empfindlichkeit des ersten Modells in Bezug auf die zweite Domäne ist;
Bestimmen einer oder mehrerer Schichten in einem zweiten Modell, das ein Duplikat des ersten Modells ist, das auf das Trainieren abzielt, basierend auf der Domänenanpassbarkeit, wobei die Domänenanpassbarkeit darstellt, ob die erste Domäne und die zweite Domäne eine ähnliche Wahrscheinlichkeitsverteilung aufweisen; und
Anwenden eines Transferlernens auf die eine oder die mehreren Schichten in dem zweiten Modell, die auf das Trainieren abzielen, unter Verwendung von Bildern der zweiten Domäne als Trainingsdaten, wobei
das Bestimmen ein Sicherstellen umfasst, dass die Anzahl von Schichten, die auf das Trainieren abzielen, umso größer ist, je niedriger die Domänenanpassbarkeit ist, und die Anzahl von Schichten, die auf das Trainieren abzielen, umso kleiner ist, je höher die Domänenanpassbarkeit ist, wobei
das Bestimmen mehr von Schichten nahe einer Eingabeschicht als Schichten bestimmt, die auf das Trainieren abzielen, wenn die Domänenanpassbarkeit niedriger wird.

4. Computerlesbares Aufzeichnungsmedium, umfassend Anweisungen, die, wenn sie von einem Computer ausgeführt werden, den Computer veranlassen, das Verfahren nach Anspruch 3 auszuführen.

## Revendications

1. Dispositif d'apprentissage automatique (100) comprenant :
une unité de détermination d'adaptabilité de domaine (52) configurée pour déterminer une adaptabilité de domaine sur la base d'une précision d'inférence à partir d'images d'un second domaine en utilisant un premier modèle entraîné pour catégoriser une image en utilisant des images d'un premier domaine en tant que données d'apprentissage, le premier modèle étant un réseau neuronal, dans lequel l'adaptabilité de domaine est une précision moyenne, une valeur F ou une sensibilité du premier modèle par rapport au second domaine ;
une unité de détermination de couche d'apprentissage (54) configurée pour déterminer une ou plusieurs couches dans un second modèle, qui est un double du premier modèle, ciblé pour l'apprentissage, sur la base de l'adaptabilité de domaine, dans lequel l'adaptabilité de domaine représente si le premier domaine et le second domaine ont une distribution de probabilité similaire ; et
une unité d'exécution d'apprentissage de transfert (56) configurée pour appliquer un apprentissage de transfert aux une ou plusieurs couches dans le second modèle ciblé pour l'apprentissage, en utilisant des images du second domaine en tant que données d'apprentissage, dans lequel
l'unité de détermination de couche d'apprentissage (54) est configurée pour garantir que plus l'adaptabilité de domaine est faible, plus le nombre de couches ciblé pour l'apprentissage est élevé, et plus l'adaptabilité de domaine est élevée, plus le nombre de couches ciblé pour l'apprentissage est faible, dans lequel
l'unité de détermination de couche d'apprentissage (54) détermine plus de couches près d'une couche d'entrée en tant que couches ciblé pour l'apprentissage, à mesure que l'adaptabilité de domaine devient plus faible.

2. Dispositif d'apprentissage automatique selon la revendication 1, dans lequel
l'unité de détermination de couche d'apprentissage (54) est configurée pour déterminer que des couches entièrement connectées sont des couches ciblées pour l'apprentissage lorsque l'adaptabilité de domaine est égale ou supérieure à une valeur prédéterminée.

3. Procédé d'apprentissage automatique comprenant :
déterminer une adaptabilité de domaine sur la base d'une précision d'inférence à partir d'images d'un second domaine en utilisant un premier modèle entraîné pour catégoriser une image en utilisant des images d'un premier domaine en tant que données d'apprentissage, le premier modèle étant un réseau neuronal, dans lequel l'adaptabilité de domaine est une précision moyenne, une valeur F ou une sensibilité du premier modèle par rapport au second domaine ;
déterminer une ou plusieurs couches dans un second modèle, qui est un double du premier modèle, ciblé pour l'apprentissage, sur la base de l'adaptabilité de domaine, dans lequel l'adaptabilité de domaine représente si le premier domaine et le second domaine ont une distribution de probabilité similaire ; et
appliquer un apprentissage de transfert aux une ou plusieurs couches dans le second modèle ciblé pour l'apprentissage, en utilisant des images du second domaine en tant que données d'apprentissage, dans lequel
déterminer comprend garantir que plus l'adaptabilité de domaine est faible, plus le nombre de couches ciblé pour l'apprentissage est élevé, et plus l'adaptabilité de domaine est élevée, plus le nombre de couches ciblé pour l'apprentissage est faible, dans lequel
déterminer détermine plus de couches près d'une couche d'entrée en tant que couches ciblé pour l'apprentissage, à mesure que l'adaptabilité de domaine devient plus faible.

4. Support d'enregistrement lisible par ordinateur comprenant des instructions qui, lorsqu'elles sont exécutées par un ordinateur, amènent l'ordinateur à réaliser le procédé selon la revendication 3.
